# EUROPÄISCHE PATENTSCHRIFT

(11) **EP 1 729 107 B1**
(45) Veröffentlichungstag und Bekanntmachung des Hinweises auf die Patenterteilung: **10.07.2013**
(21) Anmeldenummer: 06010093.0
(22) Anmeldetag: 16.05.2006
(51) Int. Cl.: G01N 15/06, G01N 21/53

(54) **Partikelkonzentrations-Messvorrichtung und Justageverfahren hierfür**
Particle concentration measuring device and adjustment method therefore
Dispositif de mesure de la concentration de particules et son procédé d'ajustage

(30) Priorität: 01.06.2005 DE 102005025183
(43) Veröffentlichungstag der Anmeldung: 06.12.2006
(73) Patentinhaber: SICK Engineering GmbH, 01458 Ottendorf-Okrilla (DE)
(72) Erfinder: Schröter, Gerry, 01239 Dresden (DE); Melcher, Uwe, 01458 Ottendorf-Okrilla (DE)
(74) Vertreter: Manitz, Finsterwald & Partner GbR

(56) Entgegenhaltungen:
- DE-A1- 10 218 415
- US-A- 3 650 627
- US-A- 5 093 866
- US-A1- 2002 057 433
- US-B1- 6 323 949

## Beschreibung

Die Erfindung betrifft eine Partikelkonzentrations-Messvorrichtung zur Bestimmung einer Partikelkonzentration innerhalb eines Messvolumens, wobei die Messvorrichtung zumindest einen Lichtsender zum Aussenden eines Sendelichtstrahls in Richtung des Messvolumens, eine Sendeoptik zum Bündeln des Sendelichtstrahls entlang einer optischen Sendeachse, und einen Lichtempfänger aufweist, mittels dessen ein Anteil des Sendelichtstrahls detektierbar ist, der von Partikeln im Messvolumen gedämpft transmittiert oder von Partikeln im Messvolumen gestreut wird.

Derartige Messvorrichtungen dienen zur Bestimmung der Konzentration (einschließlich der Zusammensetzung) von Partikeln, beispielsweise von Staub- oder Rußpartikeln in industriellen Abgasschornsteinen. Hierfür wird üblicherweise eine Transmissionslichtmessung durchgeführt, bei der ein Sendelichtstrahl (sichtbares Licht, Ultraviolett oder Infrarot) quer durch das Messvolumen geführt wird und hierbei die Absorption des Sendelichts gemessen wird. Aus der gemessenen Abschwächung des Sendelichts lässt sich die Partikelkonzentration im Messvolumen bestimmen. Zusätzlich oder alternativ kann auch eine Streulichtmessung durchgeführt werden, bei der der verwendete Lichtempfänger nicht direkt von dem Sendelichtstrahl beaufschlagt wird, sondern einen Anteil des von den Partikeln seitlich gestreuten Sendelichts detektiert. Eine derartige Streulichtmessung eignet sich insbesondere zur Bestimmung von vergleichsweise geringen Partikelkonzentrationen.

In beiden Fällen besitzt die Messvorrichtung üblicherweise an derjenigen Seite des Messvolumens, die dem Lichtsender gegenüberliegt, eine Lichtbeaufschlagungseinheit, die von dem Sendelichtstrahl beaufschlagt wird und im Falle der Transmissionslichtmessung entweder einen Reflektor (so genannte Zwei-Weg-Messung) oder den Lichtempfänger (so genannte Ein-Weg-Messung) enthält. Im Falle der Streulichtmessung sind an der Lichtbeaufschlagungseinheit beispielsweise eine Lichtfalle zur Absorption des Sendelichts und ein Streulichtempfänger mit zugeordneter Empfangsoptik vorgesehen.

Es ist wichtig, dass die optische Sendeachse des Sendelichtstrahls möglichst genau auf die genannte Lichtbeaufschlagungseinheit (Reflektor, Lichtempfänger und/oder Lichtfalle) ausgerichtet ist, damit für den oder die Lichtempfänger ein hohes Signal/Rausch-Verhältnis erzielt wird und Störlichteffekte verhindert werden. Es existieren deshalb Messvorrichtungen mit der Möglichkeit einer Justierung der optischen Sendeachse. Beispielsweise ist es bekannt, optische Bauelemente wie Prismen oder Spiegel zu verdrehen, um den Sendelichtstrahl entsprechend umzulenken. Nachteilig hieran ist jedoch, dass derartige optische Bauelemente auch eine zusätzliche Absorption der Lichtsignale oder unerwünschte Störlichteffekte bewirken können.

Aus der US 2002/0057433 A1 ist ein Verfahren zur Charakterisierung von Teilchen unter Verwendung von elliptisch polarisierter Strahlung bekannt. Hierfür sind ein Lichtsender, ein Streulichtdetektor und ein Transmissionslichtdetektor vorgesehen, wobei mittels eines Motors ein Drehteller gedreht werden kann, an dem die Probe und der Streulichtdetektor befestigt sind. Hierdurch kann der Streuwinkel geändert werden.

Die US 3,650,527 beschreibt eine Vorrichtung zur Messung der Sichtweite bei Nebel, wobei die von dem Nebel zurückreflektierte Strahlung gemessen wird. Hierfür ist eine Strahlteileranordnung von Lichtsender und Lichtempfänger vorgesehen, wobei diese Anordnung um eine Achse schwenkbar ist, die senkrecht zu der Sendeachse verläuft.

Die DE 102 18 415 A1 offenbart ein Partikeluntersuchungsgerät, das eine Lichtsendeeinrichtung, eine Strahljustiereinrichtung, eine Messzelle und einen Detektor umfasst. Mittels der Strahljustiereinrichtung kann das Untersuchungslichtstrahlenbündel entlang der optischen Achse ausgerichtet werden, wobei ein Verstellen in X-, Y- und Z-Richtung möglich ist. Die Messzelle ist an einem Schwenkarm eines Drehtisches angeordnet, um die Messzelle wahlweise in den Strahlengang einzuschwenken oder aus diesem herauszuschwenken.

Es ist eine Aufgabe der Erfindung, eine Partikelkonzentrations-Messvorrichtung zu schaffen, die ohne Beeinträchtigung der Lichtsignale und bei geringem Herstellungsaufwand eine Justierung der optischen Sendeachse gestattet.

Diese Aufgabe wird durch eine Partikelkonzentrations-Messvorrichtung mit den Merkmalen des Anspruchs 1 gelöst.

Die Ausrichtung der optischen Sendeachse bezüglich der genannten Lichtbeaufschlagungseinheit (Reflektor, Lichtempfänger und/oder Lichtfalle) wird also durch ein Verschwenken einer stabilen Trägereinrichtung justiert, an der zumindest der Lichtsender und die Sendeoptik starr, d.h. in dauerhaft festgelegter Relativlage montiert sind. Durch ein gemeinsames Verschwenken von Lichtsender und Sendeoptik ist gewährleistet, dass für die Justage der optischen Sendeachse bezüglich der Lichtbeaufschlagungseinheit das gesamte optische System bewegt wird und somit seine optischen Eigenschaften beibehält.

Es wird also lediglich die Ausrichtung der optischen Sendeachse geändert, wobei die optischen Bauelemente, die den Verlauf und die Ausrichtung der optischen Sendeachse festlegen, an der Trägereinrichtung in einer vorbestimmten Relativlage angeordnet sind und bleiben. Dies schließt zwar nicht aus, dass werksseitig eine manuelle Justierung beispielsweise des Lichtsenders oder der Sendeoptik erfolgt, zum Beispiel um den Lichtsender relativ zu einem zusätzlichen Streulichtsender zu justieren. Während der Dauer des eigentlichen Messbetriebs für die Transmissionslichtmessung und die Streulichtmessung nehmen der Lichtsender und die Sendeoptik jedoch eine dauerhaft festgelegte Relativlage zueinander ein.

Die Kombination einer stabilen Trägereinrichtung mit fest montiertem Lichtsender und Sendeoptik einerseits und der Möglichkeit andererseits, die Trägereinrichtung im Wesentlichen stufenlos zu bewegen, gestattet hinsichtlich der verwendeten mechanischen Komponenten vergleichsweise große Toleranzen, so dass eine kostengünstige Herstellung der Messvorrichtung möglich ist. Der bewegliche Träger kann leicht an dem verwendeten Gehäuse der Messvorrichtung montiert bzw. hiervon demontiert werden. Auch die Endmontage an der Kanalwand kann zeitsparend und somit kostengünstig erfolgen, da die Verschwenkbarkeit der Trägereinrichtung eine schnelle und einfache Justage ermöglicht. Geometrische Veränderungen der Messumgebung - beispielsweise Ausdehnungsänderungen aufgrund von Temperatureffekten - machen sich bei der erfindungsgemäßen Messvorrichtung allenfalls geringfügig bemerkbar, da die optischen Komponenten auf einem gemeinsamen stabilen Träger fest montiert sind. Außerdem können Ausdehnungen z.B. eines Schornsteins und damit verbundene Dejustierungen sehr einfach und schnell korrigiert werden, wie nachfolgend noch erläutert wird.

Gegenüber bekannten Messvorrichtungen mit beweglichen einzelnen optischen Bauelementen zur variablen Strahlumlenkung besitzt die erfindungsgemäße Messvorrichtung den Vorteil, dass die Justierung der optischen Sendeachse keine zusätzlichen optischen Bauelemente erfordert, die eine unerwünschte Absorption der Lichtsignale bewirken.

Vorzugsweise ist für die Trägereinrichtung eine Schwenkbewegung um zwei senkrecht zueinander verlaufende Schwenkachsen vorgesehen, um eine freie Verschwenkbarkeit der optischen Sendeachse in beliebiger Richtung zu gestatten. Es ist vorgesehen, dass die Trägereinrichtung senkrecht zu der optischen Sendeachse verschwenkbar ist, also dass die Schwenkachse oder Schwenkachsen senkrecht zu der optischen Sendeachse verläuft bzw. verlaufen.

Von besonderem Vorteil ist es, dass die Trägereinrichtung bzw. die optische Sendeachse bezüglich eines Lichtaustrittsfensters der Messvorrichtung verschwenkbar ist, wobei dieses Lichtaustrittsfenster die optische Grenzfläche der Messvorrichtung zu dem Messvolumen bildet. Mit anderen Worten ist die Trägereinrichtung um wenigstens eine Schwenkachse verschwenkbar, die an dem Lichtaustrittsfenster oder benachbart hierzu verläuft. Hierdurch ist gewährleistet, dass trotz eines Versetzens der optischen Sendeachse zum Zwecke einer Justierung die optische Sendeachse stets das Lichtaustrittsfenster durchquert. Somit kann ein Lichtaustrittsfenster mit minimaler Öffnungsfläche zum Einsatz gelangen.

Üblicherweise muss das Lichtaustrittsfenster an der dem Messvolumen zugewandten Seite permanent mit gereinigter Luft gespült werden, um Ablagerungen an dem Lichtaustrittsfenster zu vermeiden. Je geringer die Fläche des Lichtaustrittsfensters ist, umso zuverlässiger kann die Luftspülung durchgeführt werden und umso geringer ist auch der benötigte Volumenstrom der Spülluft, so dass durch eine verringerte optische Grenzfläche eine erhebliche Kostenersparnis für den laufenden Betrieb der Messvorrichtung erzielt wird.

Die erläuterte Anlenkung der Trägereinrichtung an dem Lichtaustrittsfenster kann beispielsweise durch einen Hohlzapfeneingriff oder eine Kugelgelenkverbindung erfolgen.

Gemäß einer besonders vorteilhaften Weiterbildung ist eine automatische Selbstjustage der Messvorrichtung vorgesehen. Hierfür ist der Lichtempfänger ortsauflösend ausgebildet, und er ist mit einer Auswerte- und Steuereinrichtung verbunden. Diese erzeugt in Abhängigkeit von Lichtempfangssignalen des ortsauflösenden Lichtempfängers Justagesteuersignale für eine Antriebseinrichtung, durch die die Trägereinrichtung in Abhängigkeit von den Justagesteuersignalen motorisch verschwenkt wird. Mit anderen Worten detektiert der ortsauflösende Lichtempfänger die aktuelle Ausrichtung der optischen Sendeachse, und erforderlichenfalls wird die optische Sendeachse durch Verschwenken der Trägereinrichtung gemäß den Justagesteuersignalen der Auswerte- und Steuereinrichtung nachgestellt.

Durch eine derartige automatische Selbstjustage vereinfacht sich die Endmontage der Messvorrichtung am Einsatzort erheblich. Der Monteur muss lediglich eine manuelle Grobjustage der Ausrichtung der optischen Sendeachse bezüglich der gegenüberliegenden Lichtbeaufschlagungseinheit vornehmen. Die Feinjustage kann dann durch entsprechende Ansteuerung der Antriebseinrichtung mittels der Auswerte- und Steuereinrichtung automatisch erfolgen. Vor allem können auch allmähliche geometrische Veränderungen der Messumgebung - beispielsweise temperaturbedingte Ausdehnungseffekte - erfasst und korrigiert werden.

Die genannte Antriebseinrichtung zum Verfahren der Trägereinrichtung besitzt vorzugsweise Stellmotoren, also motorisch angetriebene Stellvorrichtungen, mittels derer die Trägereinrichtung in zwei zueinander senkrechten Richtungen verfahren werden kann. Es ist von Vorteil, wenn die Messvorrichtung ferner eine Vorspanneinrichtung besitzt, durch die die Trägereinrichtung in einer oder mehreren vorbestimmten Richtungen vorgespannt wird. Hierdurch wird ein eventuelles Spiel der Antriebseinrichtung beseitigt, so dass die Genauigkeit der automatischen Justierung erhöht wird.

Die Messvorrichtung kann für eine Zwei-Weg-Messung ausgebildet sein, wobei der das Messvolumen durchlaufende Sendelichtstrahl an einem Reflektor reflektiert wird und somit das Messvolumen neuerlich durchläuft. In diesem Fall ist es bevorzugt, wenn der für die Transmissionslichtmessung vorgesehene Lichtempfänger ebenfalls an der genannten Trägereinrichtung in einer vorbestimmten Relativlage zu dem Lichtsender und der Sendeoptik starr befestigt ist. Die Justierung kann somit gemeinsam für die optische Sendeachse und die durch die Anordnung des Lichtempfängers vorgegebene optische Empfangsachse erfolgen. Alternativ hierzu erfolgt eine Ein-Weg-Messung, bei der der Lichtempfänger bezüglich des Lichtsenders an einer gegenüberliegenden Seite des Messvolumens angeordnet ist.

Vorzugsweise sind sämtliche optische Bauelemente, die an der Trägereinrichtung vorgesehen sind, in einer vorbestimmten Relativlage zueinander starr an der Trägereinrichtung befestigt.

Die Erfindung bezieht sich auch auf ein Verfahren zum Justieren einer Partikelkonzentrations-Messvorrichtung mit den Merkmalen des Anspruchs 10.

Die Erfindung wird nachfolgend lediglich beispielhaft unter Bezugnahme auf die Zeichnungen erläutert.
- Fig. 1: zeigt den Aufbau einer ersten Ausführungsform einer Partikelkonzentrations-Messvorrichtung.
- Fig. 2: zeigt einen ortsauflösenden Lichtempfänger in einer Vorderansicht.
- Fig. 3: zeigt den Aufbau einer weiteren Ausführungsform einer Partikelkonzentrations-Messvorrichtung.

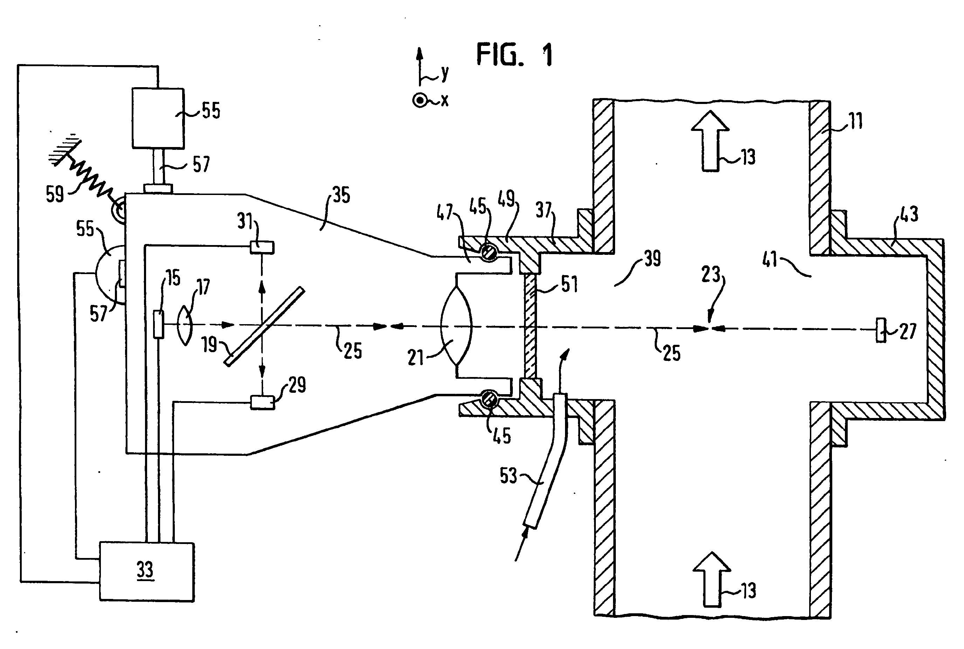

Fig. 1 zeigt in einer Querschnittsansicht einen Kanal 11, durch den entlang einer Richtung 13 von unten nach oben ein Abgas strömt. Das Abgas enthält Partikel, deren Konzentration gemessen werden soll.

Zu diesem Zweck besitzt eine Messvorrichtung einen Lichtsender 15, der beispielsweise als Leuchtdiode ausgebildet ist. Der Lichtsender 15 sendet über eine erste Sendeoptik 17, einen Strahlenteiler 19 und eine zweite Sendeoptik 21 einen Sendelichtstrahl in Richtung eines Messvolumens 23 innerhalb des Kanals 11. Die Anordnung von Lichtsender 15, erster Sendeoptik 17 und zweiter Sendeoptik 21 definieren hierbei eine optische Sendeachse 25. Nach Durchlaufen des Messvolumens 23 beaufschlagt der Sendelichtstrahl einen Reflektor 27. Dort wird das Sendelicht reflektiert und durch das Messvolumen 23 über die zweite Sendeoptik 21 und den Strahlenteiler 19 auf einen ortsauflösenden Lichtempfänger 29 gelenkt. Zwischen dem Reflektor 27 und dem Strahlenteiler 19 fallen der optische Weg des ausgesendeten Sendelichts und der optische Weg des reflektierten Sendelichts zusammen, d.h. die optische Empfangsachse ist mit der optischen Sendeachse 25 identisch.

Ein Teil des von dem Lichtsender 15 abgegebenen Sendelichts wird über den Strahlenteiler 19 direkt - also ohne Durchlaufen des Messvolumens 23 - auf einen Referenzlichtempfänger 31 umgelenkt.

Der Lichtsender 15, der ortsauflösende Lichtempfänger 29 und der Referenzlichtempfänger 31 sind mit einer Auswerte- und Steuereinrichtung 33 verbunden, die beispielsweise durch einen Mikroprozessor gebildet ist. Die Auswerte- und Steuereinrichtung 33 steuert den Lichtsender 15 zum Aussenden des Sendelichtstrahls an und wertet die Lichtempfangssignale aus, die von den Lichtempfängern 29, 31 erzeugt und ausgegeben werden. Da die Lichtsignale, die den ortsauflösenden Lichtempfänger 29 erreichen, das Messvolumen 23 zweifach durchlaufen haben und dabei von den im Kanal 11 befindlichen Partikeln teilweise absorbiert worden sind, kann die Auswerte- und Steuereinrichtung 33 durch Vergleich der Lichtempfangssignale des Lichtempfängers 29 mit den (ungeschwächten) Lichtempfangssignalen des Referenzlichtempfängers 31 die Reduzierung der Transmission des Sendelichts im Messvolumen 23 bestimmen, die durch eine entsprechende Partikelkonzentration verursacht wird. Die Messvorrichtung führt also eine Transmissionslichtmessung aus.

Um eine optimale Lichtbeaufschlagung des Reflektors 27 und des Lichtempfängers 29 zu gewährleisten und unerwünschte Störlichteffekte zu vermeiden, gestattet die Auswerte- und Steuereinrichtung 33 eine automatische Justage der optischen Sendeachse 25 bezüglich des Reflektors 27, wie nachfolgend erläutert wird.

Der Lichtsender 15, die erste Sendeoptik 17 und die zweite Sendeoptik 21 sowie auch der Strahlenteiler 19, der ortsauflösende Lichtempfänger 29 und der Referenzlichtempfänger 31 sind an einer gemeinsamen Trägerplattform 35 starr montiert, so dass die genannten optischen Bauelemente eine vorbestimmte Relativlage zueinander einnehmen. Zwar kann für einzelne Bauelemente - beispielsweise für den Lichtsender 15 oder den Strahlenteiler 19 - die Möglichkeit einer manuellen Justierung relativ zu der Trägerplattform 35 vorgesehen sein, beispielsweise für eine einmalige werksseitige Justage. Im Rahmen der nachfolgend erläuterten automatischen Selbstjustage oder des eigentlichen Messbetriebs der Messvorrichtung wird die Relativanordnung der an der Trägerplattform 35 montierten Bauelemente 15, 17, 19, 21, 29, 31 jedoch nicht mehr verändert, d.h. das gezeigte optische System ändert seine optischen Eigenschaften nicht mehr.

Die Trägerplattform 35 ist an einem Befestigungsflansch 37 angelenkt, der an dem Kanal 11 montiert ist und dort eine erste Öffnung 39 umgibt. An der gegenüberliegenden Seite besitzt der Kanal 11 eine zweite Öffnung 41, die von einer Abdeckhaube 43 bedeckt ist, die den Reflektor 27 enthält und mit diesem eine Lichtbeaufschlagungseinheit der Messvorrichtung bildet.

Die Anlenkung der Trägerplattform 35 an dem Befestigungsflansch 37 erfolgt über einen elastischen O-Ring 45, der in eine jeweilige Ringnut an einem Hohlzapfenabschnitt 47 der Trägerplattform 35 bzw. einem Kragenabschnitt 49 des Befestigungsflansches 37 im Wesentlichen formschlüssig eingesetzt ist. Hierdurch ist die Trägerplattform 35 bezüglich des Befestigungsflansches 37 innerhalb eines vorbestimmten begrenzten Raumwinkels frei schwenkbar, d.h. das Verschwenken der Trägerplattform 35 kann bezüglich der Darstellung gemäß Fig. 1 senkrecht zu der Darstellungsebene und/oder in vertikaler Richtung erfolgen (x/y-Verschwenkbarkeit).

Somit verlaufen die Schwenkachsen dieser x/y-Verschwenkbarkeit der Trägerplattform 35 unmittelbar benachbart zu der zweiten Sendeoptik 21 sowie unmittelbar benachbart zu einem Lichtaustrittsfenster 51, das an dem Befestigungsflansch 37 als planparallele transparente Platte angebracht ist. Das Lichtaustrittsfenster 51 schließt den Innenraum des Kanals 11 zu der Trägerplattform 35 hin ab. Um eine Verschmutzung des Lichtaustrittsfensters 51 durch die mit dem Abgas mitgeführten Partikel zu verhindern, wird das Lichtaustrittsfenster 51 ständig mit gereinigter Luft gespült, die über eine Reinigungsluftleitung 53 auf das Lichtaustrittsfenster 51 gerichtet wird und schließlich durch die Kanalöffnung 39 in den Innenraum des Kanals 11 entweicht. Selbstverständlich kann auch an der gegenüberliegenden Abdeckhaube 43 eine entsprechende Schutzmaßnahme (Abschlussfenster mit Luftspülung) vorgesehen sein.

Das Verschwenken der Trägerplattform 35 und somit der optischen Sendeachse 25 erfolgt mittels zweier Stellmotoren 55. Diese greifen jeweils über einen Stößel 57 an der Trägerplattform 35 an, wobei für die erläuterte x/y-Verschwenkbarkeit ein linearer Stellantrieb in zwei zueinander senkrechte Richtungen verwirklicht ist. Eine Zugfeder 59 sorgt für eine Vorspannung der Trägerplattform 35 entgegen der jeweiligen Angriffsrichtung der beiden Stellmotoren 55, so dass die Trägerplattform 35 spielfrei gelagert ist.

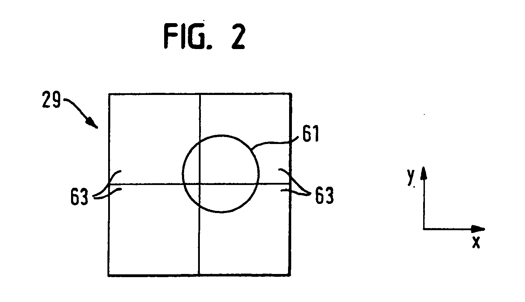

Die Ansteuerung der Stellmotoren 55 erfolgt mittels der Auswerte- und Steuereinrichtung 33 aufgrund entsprechender Justagesteuersignale, die in Abhängigkeit von den Lichtempfangssignalen des ortsauflösenden Lichtempfängers 29 erzeugt werden. Dies wird nachfolgend im Zusammenhang mit Fig. 2 erläutert.

Fig. 2 zeigt den ortsauflösenden Lichtempfänger 29 in einer Vorderansicht. Der Lichtempfänger 29 wird von dem Sendelichtstrahl beaufschlagt, der als Lichtfleck 61 erscheint. Der Lichtempfänger 29 ist als ein Quadrantensensor mit vier photosensitiven Empfangselementen 63 ausgebildet, die beispielsweise durch Photodioden gebildet sind und jeweils ein eigenes Lichtempfangssignal für die Auswerte- und Steuereinrichtung 33 (Fig. 1) erzeugen.

Durch Vergleich der Lichtempfangssignale der Paare von in x-Richtung benachbarten Empfangselementen 63 und von in y-Richtung benachbarten Empfangselementen 63 kann die Auswerte- und Steuereinrichtung 33 die Lage des Lichtflecks 61 an dem Lichtempfänger 29 ermitteln. Aufgrund einer derartigen Auswertung werden Justagesteuersignale für die Stellmotoren 55 (Fig. 1) erzeugt, um durch eine entsprechende x/y-Verschwenkung der Trägerplattform 35 zu bewirken, dass die optische Sendeachse 25 genau auf den Reflektor 27 ausgerichtet ist und der ortsauflösende Lichtempfänger 29 dementsprechend im Zentrum der lichtempfindlichen Fläche von dem reflektierten Sendelicht beaufschlagt wird. Hierdurch sorgt die Auswerte- und Steuereinrichtung 33 für eine automatische Selbstjustage des an der Trägerplattform 35 montierten optischen Systems.

Aufgrund dieser automatischen Selbstjustage kann die Ausrichtung der optischen Sendeachse 25 bezüglich des Reflektors 27 justiert werden, ohne dass die optischen Eigenschaften des werksseitig bereits montierten und justierten optischen Systems auf der Trägerplattform 35 geändert werden müssen. Die bei der Anbringung der Messvorrichtung an dem Kanal 11 erforderliche manuelle Grobjustierung der Trägerplattform 35 bezüglich des Reflektors 27 erfordert keine besonders hohe Genauigkeit, da die notwendige Feinjustierung automatisch vorgenommen wird. Durch periodische Wiederholung der automatischen Selbstjustage zwischen dem eigentlichen Messbetrieb können auch allmähliche geometrische Veränderungen des Messkanals bzw. des Kanals 11 kompensiert werden. Die Verwirklichung der automatischen Selbstjustage erfordert keine zusätzlichen optischen Bauelemente, die zu einer unerwünschten Absorption des ausgesendeten und/oder empfangenen Lichts oder zu Störlichteffekten führen können.

Durch die Verschwenkbarkeit der Trägerplattform 35 bezüglich des Lichtaustrittsfensters 51 ist gewährleistet, dass trotz der Justierbarkeit der optischen Sendeachse 25 der Sendelichtstrahl stets das Lichtaustrittsfenster 51 durchquert, ohne dass dieses vergrößert ausgebildet werden muss. Somit ist für die erläuterte Luftspülung des Lichtaustrittsfensters 51 lediglich ein geringer Volumenstrom erforderlich.

Alternativ zu der Darstellung gemäß Fig. 1 kann auch eine Ein-Weg-Transmissionslichtmessung vorgesehen sein. In diesem Fall entfällt der Reflektor 27, und an dessen Position ist der ortsauflösende Lichtempfänger 29 angeordnet. Es erfolgt dann also eine automatische Selbstjustage der optischen Sendeachse 25 bezüglich des Lichtempfängers 29.

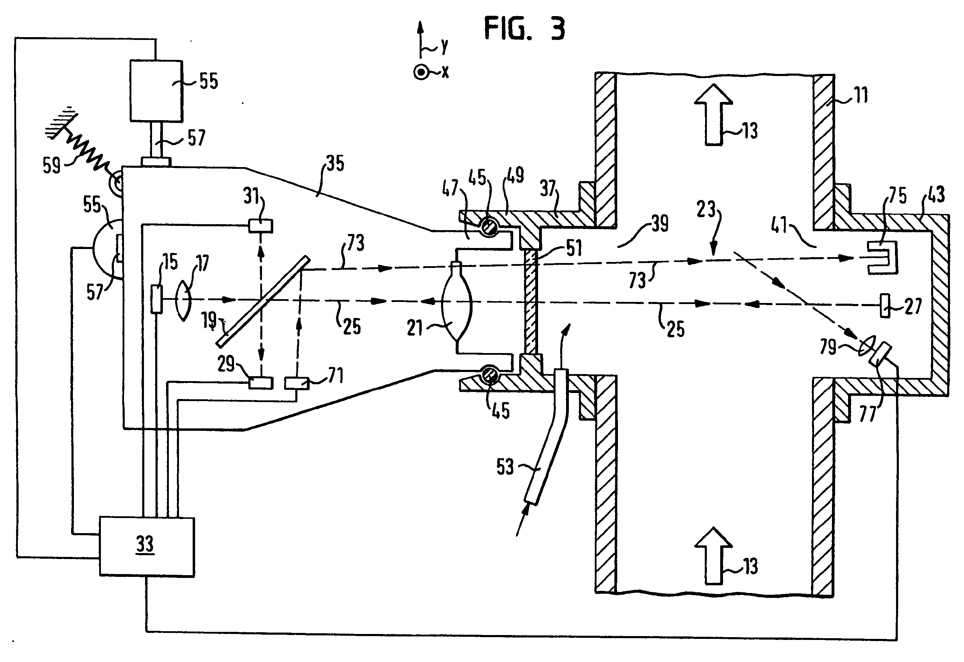

Fig. 3 zeigt eine besonders vorteilhafte Weiterbildung der Ausführungsform gemäß Fig. 1, bei der zusätzlich zu einer Zwei-Weg-Transmissionslichtmessung eine Streulichtmessung erfolgt. Zu diesem Zweck ist an der Trägerplattform 35 zusätzlich ein Streulichtsender 71 starr oder justierbar montiert, der beispielsweise als Laserdiode mit Kollimationsoptik ausgebildet ist und von der Auswerte- und Steuereinrichtung 33 angesteuert wird. Der Streulichtsender 71 sendet alternierend zu den Lichtsignalen des Lichtsenders 15, die weiterhin für die Transmissionslichtmessung vorgesehen sind, einen Streulichtsendestrahl 73 aus. Der Streulichtsendestrahl 73 wird an einem voll verspiegelten Abschnitt des Strahlenteilers 19 (oder mittels eines zusätzlich vorgesehenen Umlenkspiegels) in Richtung des Messvolumens 23 geführt. Dabei durchläuft der Streulichtsendestrahl 73 einen planparallelen Randabschnitt der zweiten Sendeoptik 21 sowie das planparallele Lichtaustrittsfenster 51. Nach dem Durchlaufen des Messvolumens 23 wird der Streulichtsendestrahl 73 in einer Lichtfalle 75 absorbiert, die innerhalb der Abdeckhaube 23 neben dem Reflektor 27 angeordnet ist. Der Streulichtsendestrahl 73 und die optische Sendeachse 25 des Lichtsenders 15 verlaufen geringfügig schräg geneigt zueinander, d.h. quasiparallel zueinander, wobei der Neigungswinkel vorzugsweise justierbar ist, beispielsweise durch Verstellen der Ausrichtung des Streulichtsenders 71.

Benachbart zu dem Reflektor 27 ist innerhalb der Abdeckhaube 43 auch ein Streulichtempfänger 77 mit zugeordneter Empfangsoptik 79 angeordnet. Der Streulichtempfänger 77 detektiert denjenigen Anteil des von dem Streulichtsender 71 ausgesendeten Lichts, der innerhalb des Messvolumens 23 von den darin enthaltenen Partikeln in einem bestimmten Winkel seitlich nach vorne gestreut wird. Entsprechende Lichtempfangssignale werden an die Auswerte- und Steuereinrichtung 33 ausgegeben.

Für eine derartige zusätzliche Streulichtmessung ist es von besonderem Vorteil, dass die optische Sendeachse 25 und der Streulichtsendestrahl 73 bzw. dessen optische Achse in einer vorbestimmten Relativlage zueinander vorgesehen sind, ohne dass diese Relativanordnung für einen Wechsel zwischen der Transmissionslichtmessung und der Streulichtmessung geändert werden muss. Somit können die Ausrichtung der optischen Sendeachse 25 und die Ausrichtung des Streulichtsendestrahls 73 mittels der erläuterten automatischen Selbstjustage anhand der Lichtempfangssignale des ortsauflösenden Lichtempfängers 29 gemeinsam justiert werden. Es sind auch keine zusätzlichen optischen Bauelemente für eine variable Strahlumlenkung erforderlich.

### Bezugszeichenliste

- 11: Kanal
- 13: Strömungsrichtung des Abgases
- 15: Lichtsender
- 17: erste Sendeoptik
- 19: Strahlenteiler
- 21: zweite Sendeoptik
- 23: Messvolumen
- 25: optische Sendeachse
- 27: Reflektor
- 29: ortsauflösender Lichtempfänger
- 31: Referenzlichtempfänger
- 33: Auswerte- und Steuereinrichtung
- 35: Trägerplattform
- 37: Befestigungsflansch
- 39: erste Kanalöffnung
- 41: zweite Kanalöffnung
- 43: Abdeckhaube
- 45: O-Ring
- 47: Hohlzapfenabschnitt
- 49: Kragenabschnitt
- 51: Lichtaustrittsfenster
- 53: Reinigungsluftleitung
- 55: Stellmotor
- 57: Stößel
- 59: Zugfeder
- 61: Lichtfleck
- 63: Empfangselement
- 71: Streulichtsender
- 73: Streulichtsendestrahl
- 75: Lichtfalle
- 77: Streulichtempfänger
- 79: Empfangsoptik

- x, y: Schwenkrichtungen

## Patentansprüche

1. Partikelkonzentrations-Messvorrichtung zur Bestimmung einer Partikelkonzentration innerhalb eines Messvolumens (23),
zumindest mit einem Lichtsender (15) zum Aussenden eines Sendelichtstrahls in Richtung des Messvolumens (23), einer Sendeoptik (17, 21) zum Bündeln des Sendelichtstrahls entlang einer optischen Sendeachse (25), und einem Lichtempfänger (29), mittels dessen ein Anteil des Sendelichtstrahls detektierbar ist, der von Partikeln im Messvolumen (23) gedämpft transmittiert oder von Partikeln im Messvolumen (23) gestreut wird,
**dadurch gekennzeichnet,**
**dass** die Ausrichtung der optischen Sendeachse (25) durch Verschwenken einer beweglichen Trägereinrichtung (35) justierbar ist, an der der Lichtsender (15) und die Sendeoptik (17, 21) befestigt sind, wobei die Trägereinrichtung (35) bezüglich eines ortsfesten Lichtaustrittsfensters (51), das die Messvorrichtung von dem Messvolumen (23) trennt, um wenigstens eine Schwenkachse verschwenkbar ist, die senkrecht zu der optischen Sendeachse (25) verläuft, so dass trotz des Verschwenkens der Trägereinrichtung (35) die optische Sendeachse stets das Lichtaustrittsfenster (51) durchquert.

2. Messvorrichtung nach Anspruch 1,
**dadurch gekennzeichnet,**
**dass** der Lichtsender (15) und die Sendeoptik (17, 21) an der Trägereinrichtung (35) in einer vorbestimmten Relativlage befestigt sind.

3. Messvorrichtung nach einem der vorhergehenden Ansprüche,
**dadurch gekennzeichnet,**
**dass** die Trägereinrichtung (35) um zwei senkrecht zueinander verlaufende Schwenkachsen verschwenkbar ist.

4. Messvorrichtung nach einem der vorhergehenden Ansprüche,
**dadurch gekennzeichnet,**
**dass** die Trägereinrichtung (35) mittels eines Hohlzapfeneingriffs oder eines Kugelgelenks an der Umgebung des Lichtaustrittsfensters (51) angelenkt ist.

5. Messvorrichtung nach einem der vorhergehenden Ansprüche,
**dadurch gekennzeichnet,**
**dass** der Lichtempfänger (29) ortsauflösend ausgebildet und mit einer Auswerte- und Steuereinrichtung (33) verbunden ist, wobei mittels der Auswerte- und Steuereinrichtung in Abhängigkeit von Lichtempfangssignalen des Lichtempfängers (29) ein Justagesteuersignal zum Justieren der Messvorrichtung erzeugbar ist, und wobei die Messvorrichtung eine Antriebseinrichtung (55, 57) aufweist, durch die die Trägereinrichtung (35) in Abhängigkeit von dem Justagesteuersignal motorisch verschwenkbar ist.

6. Messvorrichtung nach Anspruch 5,
**dadurch gekennzeichnet,**
**dass** die Antriebseinrichtung zwei Stellmotoren (55) aufweist, mittels derer die Trägereinrichtung (35) in zwei zueinander senkrechten Richtungen verschwenkbar ist,
und/oder
**dass** ferner wenigstens eine Vorspanneinrichtung (59) vorgesehen ist, durch die die Trägereinrichtung (35) in wenigstens einer Richtung vorgespannt ist,
und/oder
**dass** die Ausrichtung der optischen Sendeachse (25) in Abhängigkeit von dem Justagesteuersignal derart justierbar ist, dass der Sendelichtstrahl den Lichtempfänger (29) an einer zentralen Position beaufschlagt.

7. Messvorrichtung nach einem der Ansprüche 5 oder 6,
**dadurch gekennzeichnet,**
**dass** der Lichtempfänger (29) mehrere Empfangselemente (63) aufweist, wobei der Lichtempfänger insbesondere als ein Quadrantensensor ausgebildet ist.

8. Messvorrichtung nach einem der vorhergehenden Ansprüche,
**dadurch gekennzeichnet,**
**dass** die Messvorrichtung an einer der Trägereinrichtung (35) gegenüber liegenden Seite des Messvolumens (23) eine Lichtbeaufschlagungseinheit (27, 75) aufweist, bezüglich derer die Ausrichtung der optischen Sendeachse (25) justierbar ist.

9. Messvorrichtung nach einem der vorhergehenden Ansprüche,
**dadurch gekennzeichnet,**
**dass** der Lichtempfänger (29) an der Trägereinrichtung in einer vorbestimmten Relativlage zu dem Lichtsender (15) und der Sendeoptik (17, 21) befestigt ist,
und/ oder
**dass** ferner ein Referenzlichtempfänger (31), ein Streulichtsender (71) und/oder ein Strahlenteiler (19) an der Trägereinrichtung (35) befestigt sind.

10. Verfahren zum Justieren einer Partikelkonzentrations-Messvorrichtung zur Bestimmung einer Partikelkonzentration innerhalb eines Messvolumens (23),
wobei mittels eines Lichtsenders (15) ein Sendelichtstrahl in Richtung des Messvolumens (23) ausgesendet wird, der Sendelichtstrahl mittels einer Sendeoptik (17, 21) entlang einer optischen Sendeachse (25) gebündelt wird, und mittels eines Lichtempfängers (29) ein Anteil des Sendelichtstrahls detektiert wird, der von Partikeln im Messvolumen (23) gedämpft transmittiert oder von Partikeln im Messvolumen (23) gestreut wird,
**dadurch gekennzeichnet,**
**dass** die Ausrichtung der optischen Sendeachse (25) durch Verschwenken einer beweglichen Trägereinrichtung (35) justiert wird, an der der Lichtsender (15) und die Sendeoptik (17, 21) befestigt sind, wobei die Trägereinrichtung (35) bezüglich eines ortsfesten Lichtaustrittsfensters (51), das die Messvorrichtung von dem Messvolumen (23) trennt, um wenigstens eine Schwenkachse verschwenkt wird, die senkrecht zu der optischen Sendeachse (25) verläuft, so dass trotz des Verschwenkens der Trägereinrichtung (35) die optische Sendeachse stets das Lichtaustrittsfenster (51) durchquert.

11. Verfahren nach Anspruch 10,
**dadurch gekennzeichnet,**
**dass** der Lichtempfänger (29) ortsauflösend ausgebildet ist, wobei in Abhängigkeit von Lichtempfangssignalen des Lichtempfängers (29) ein Justagesteuersignal zum Justieren der Messvorrichtung erzeugt wird, und wobei die Trägereinrichtung (35) in Abhängigkeit von dem Justagesteuersignal motorisch verschwenkt wird.

## Claims

1. A particle concentration measurement apparatus for determining a particle concentration within a measurement volume (23),
at least having one light transmitter (15) for transmitting a transmitted light beam in the direction of the measurement volume (23), a transmission optics (17, 21) for directing the transmitted light beam along an optical transmission axis (25) and a light receiver (29) by means of which a portion of the transmitted light beam can be detected which portion is transmitted damped by particles in the measurement volume (23) or is scattered by particles in the measuring volume (23),
**characterised in that**
the orientation of the optical transmission axis (25) is adjustable by pivoting a movable carrier device (35) at which the light transmitter (15) and the transmission optics (17, 21) are fastened, with the carrier device (35) being pivotable about at least one pivot axis with respect to a fixed-position light exit window (51) which separates the measurement apparatus from the measurement volume (23), said pivot axis extending perpendicular to the optical transmission axis (25) so that the optical transmission axis always passes through the light exit window (51) despite the pivoting of the carrier device (35).

2. A measurement apparatus in accordance with claim 1,
**characterised in that**
the light transmitter (15) and the transmission optics (17, 21) are fastened at the carrier device (35) in a predefined relative position.

3. A measurement apparatus in accordance with one of the preceding claims,
**characterised in that**
the carrier device (35) is pivotable about two pivot axes extending perpendicular to one another.

4. A measurement apparatus in accordance with any one of the preceding claims,
**characterised in that**
the carrier device (34) is pivotally connected to the surrounding of the light exit window (51) by means of a hollow spigot engagement or by means of a ball joint.

5. A measurement apparatus in accordance with any one of the preceding claims,
**characterised in that**
the light receiver (29) is configured as spatially resolving and is connected to an evaluation and control device (33),
wherein an adjustment control signal can be generated by means of the evaluation and control device in dependence on light reception signals of the light receiver (29) for adjusting the measurement apparatus, and wherein the measurement apparatus has a drive device (55, 57) by which the carrier device (35) can be pivoted by a motor in dependence on the adjustment control signal.

6. A measurement apparatus in accordance with claim 5,
**characterised in that**
the drive device has two actuating motors (55) by means of which the carrier device (35) is pivotable in two directions perpendicular to one another,
and/or
**in that** furthermore at least one preload device (59) is provided by which the carrier device (35) is preloaded in at least one direction, and/or
**in that** the orientation of the optical transmission axis (25) is adjustable in dependence on the adjustment control signal such that the transmitted light beam is incident on the light receiver (29) at a central position.

7. A measurement apparatus in accordance with one of the claims 5 or 6,
**characterised in that**
the light receiver (29) has a plurality of reception elements (63), with the light receiver in particular being configured as a quadrant sensor.

8. A measurement apparatus in accordance with any one of the preceding claims,
**characterised in that**
the measurement apparatus has a light incidence unit (27, 75) at a side of the measurement volume (23) disposed opposite the carrier device (35) with respect to which light incidence unit the orientation of the optical transmission axis (25) is adjustable.

9. A measurement apparatus in accordance with any one of the preceding claims,
**characterised in that**
the light receiver (29) is fastened at the carrier device in a predefined relative position to the light transmitter (15) and to the transmission optics (17, 21),
and/or
**in that** furthermore a reference light receiver (31), a scattered light transmitter (71) and/or a beam splitter (19) are fastened at the carrier device (35).

10. A method of adjusting a particle concentration measurement apparatus for determining a particle concentration within a measurement volume (23),
wherein a transmitted light beam is transmitted in the direction of the measurement volume (23) by means of a light transmitter (15), the transmitted light beam is directed along an optical transmission axis (25) by means of a transmission optics (17, 21), a portion of the transmitted light beam is detected by means of a light receiver (29) and is transmitted damped by particles in the measurement volume (23) or is scattered by particles in the measurement volume (23),
**characterised in that**
the orientation of the optical transmission axis (25) is adjustable by pivoting a movable carrier device (35) at which the light transmitter (15) and the transmission optics (17, 21) are fastened, with the carrier device (35) being pivoted about at least one pivot axis with respect to a fixed-position light exit window (51) which separates the measurement apparatus from the measurement volume (23), said pivot axis extending perpendicular to the optical transmission axis (25) so that the optical transmission axis always passes through the light exit window (51) despite the pivoting of the carrier device (35).

11. A method in accordance with claim 10,
**characterised in that**
the light receiver (29) is configured as spatially resolving, with an adjustment control signal being generated in dependence on light reception signals of the light receiver (29) for adjusting the measurement apparatus, and with the carrier device (35) being pivoted by a motor in dependence on the adjustment control signal.

## Revendications

1. Dispositif de mesure de concentration de particules pour la détermination d'une concentration de particules à l'intérieur d'un volume de mesure (23),
comprenant au moins un émetteur de lumière (15) pour émettre un rayon de lumière émise en direction du volume de mesure (23), une optique de réception (17, 21) pour focaliser le rayon de lumière émise le long d'un axe d'émission optique (25), et un récepteur de lumière (29) au moyen duquel il est possible de détecter une part du rayon de lumière émise qui est transmise de manière atténuée par les particules dans le volume de mesure (23) ou qui est diffusée par les particules dans le volume de mesure (23),
**caractérisé en ce que**
l'orientation de l'axe d'émission optique (25) est susceptible d'être ajustée en faisant pivoter un dispositif porteur mobile (35) sur lequel sont fixés l'émetteur de lumière (15) et l'optique d'émission (17, 21), ledit dispositif porteur (35) étant susceptible de pivoter, par rapport à une fenêtre de sortie de lumière stationnaire (51), qui sépare le dispositif de mesure vis-à-vis du volume de mesure (23), autour d'au moins un axe de pivotement qui s'étend perpendiculairement à l'axe d'émission optique (25), de sorte que, malgré le pivotement du dispositif porteur (35), l'axe d'émission optique traverse toujours la fenêtre de sortie de lumière (51)

2. Dispositif de mesure selon la revendication 1,
**caractérisé en ce que** l'émetteur de lumière (15) et l'optique d'émission (17, 21) sont fixés sur le dispositif porteur (35) dans une position relative prédéterminée.

3. Dispositif de mesure selon l'une des revendications précédentes,
**caractérisé en ce que** le dispositif porteur (35) est capable de pivoter autour de deux axes de pivotement qui s'étendent perpendiculairement l'un à l'autre.

4. Dispositif de mesure selon l'une des revendications précédentes,
**caractérisé en ce que** le dispositif porteur (35) est articulé à l'entourage de la fenêtre de sortie de lumière (51) au moyen d'un engagement à tenon creux ou d'une articulation à rotule.

5. Dispositif de mesure selon l'une des revendications précédentes,
**caractérisé en ce que** le récepteur de lumière (29) est réalisé à résolution locale et est connecté à un système d'évaluation et de commande (33),
dans lequel un signal de commande d'ajustement pour ajuster le dispositif de mesure est susceptible d'être engendré au moyen du système d'évaluation et de commande en fonction de signaux de réception de lumière provenant du récepteur de lumière (29), et
dans lequel le dispositif de mesure comprend un moyen d'entraînement (55, 57) au moyen duquel le dispositif porteur (35) peut être pivoté de façon motorisée en fonction du signal de commande d'ajustement.

6. Dispositif de mesure selon la revendication 5,
**caractérisé en ce que**
le moyen d'entraînement comprend deux moteurs de positionnement (55) au moyen desquels le dispositif porteur (35) est susceptible de pivoter dans deux directions mutuellement perpendiculaires, et/ou en ce qu'il est en outre prévu un dispositif de précontrainte (59) au moyen duquel le dispositif porteur (35) est précontraint dans au moins une direction, et/ou
**en ce que** l'orientation de l'axe d'émission optique (25) est susceptible d'être ajustée en fonction du signal de commande d'ajustement de telle façon que le rayon de lumière émise tombe sur le récepteur de lumière (29) à une position centrale.

7. Dispositif de mesure selon l'une des revendications 5 ou 6,
**caractérisé en ce que** le récepteur de lumière (29) comprend plusieurs éléments récepteurs (63), et le récepteur de lumière est en particulier réalisé comme un capteur à quadrants.

8. Dispositif de mesure selon l'une des revendications précédentes,
**caractérisé en ce que** le dispositif de mesure comprend, sur un côté du volume de mesure (28) situé à l'opposé du dispositif porteur (35), une unité de réception de lumière (27, 75), par rapport à laquelle l'orientation de l'axe d'émission optique (25) peut être ajustée.

9. Dispositif de mesure selon l'une des revendications précédentes,
**caractérisé en ce que**
le récepteur de lumière (29) est fixé sur le dispositif porteur dans une position relative prédéterminée par rapport à l'émetteur de lumière (15) et à l'optique d'émission (17, 21), et/ou
**en ce qu'**il est en outre prévu un récepteur de lumière de référence (31), un émetteur de lumière diffuse (71) et/ou un séparateur de rayons (19), fixés sur le dispositif porteur (35).

10. Procédé pour ajuster un dispositif de mesure de concentration de particules destiné à déterminer une concentration de particules à l'intérieur d'un volume de mesure (23),
dans lequel on émet au moyen d'un émetteur de lumière (15) un rayon de lumière émise en direction du volume de mesure (23), le rayon de lumière émise est focalisé le long d'un axe d'émission optique (25) au moyen d'une optique d'émission (17, 21), et au moyen d'un récepteur de lumière (29) on détecte d'une part du rayon de lumière émise qui est transmise de manière amortie par des particules dans le volume de mesure (23) ou qui est diffusée par des particules dans le volume de mesure (23),
**caractérisé en ce que** l'on ajuste l'orientation de l'axe d'émission optique (25) par pivotement d'un dispositif porteur mobile (35) sur lequel l'émetteur de lumière (15) et l'optique d'émission (27, 21) sont fixés, dans lequel le dispositif porteur (35) est pivoté, par rapport à une fenêtre de sortie de lumière stationnaire (51), qui sépare le dispositif de mesure vis-à-vis du volume de mesure (23), autour d'au moins un axe de pivotement qui s'étend perpendiculairement à l'axe d'émission optique (25), de sorte que l'axe d'émission optique traverse toujours la fenêtre de sortie de lumière (51) malgré le pivotement du dispositif porteur (35).

11. Procédé selon la revendication 10,
**caractérisé en ce que** le récepteur de lumière (29) est réalisé à résolution locale, et un signal de commande d'ajustement pour ajuster le dispositif de mesure est engendré en fonction de signaux de réception de lumière du récepteur de lumière (29), et dans lequel le dispositif porteur (35) est pivoté par voie motorisée en fonction du signal de commande d'ajustement.
